Europäisches Patentamt

European Patent Office

Office européen des brevets

(11) Publication number: **0 334 786**
**A2**

## (12) EUROPEAN PATENT APPLICATION

(21) Application number: **89500012.3**

(22) Date of filing: **02.02.89**

(51) Int. Cl.⁴: **C 22 B 21/00**

(30) Priority: **03.02.88 ES 8800300**

(43) Date of publication of application:
**27.09.89 Bulletin 89/39**

(84) Designated Contracting States: **ES FR GR IT**

(71) Applicant: **REMETAL, S.A.**
**Carrtra. Asua-Lujua, s/n.**
**E-48016 Asua (Vizcaya) (ES)**

(72) Inventor: **Artola, José Maria**
**2 A. Isasti Street**
**Neguri-Guecho (Vizcaya) (ES)**

(74) Representative: **Lopez Medrano, Santiago**
**Gran Via, 40 -5.**
**E-28013 Madrid (ES)**

(54) **Recycling process for slag, especially salts proceeding from the refining of aluminium scrap.**

㉗ A process for recovering salt and solid products, for example metallic aluminium and oxides such as alumina, from slag resulting from the refining of aluminium scrap in rotary-hearth furnaces, in which the whole of the scrap is triturated in suitable screens and the resulting powder, once the metallic particles have been separated is washed with water to separate the liquid and solid products, through cake filters. The resulting liquid is subjected to evaporation in shallow tanks and is subsequently crystallized by the action of solar energy.

EP 0 334 786 A2

## Description

## RECYCLING PROCESS FOR SLAG, ESPECIALLY SALTS PROCEEDING FROM THE REFINING OF ALUMINIUM SCRAP.

Within the field of aluminium scrap refining in rotary-hearth furnaces, large amounts of salt are normally used, with which a by-product or saline slag is generated, which until now could be deposited without problems on controlled rubbish dumps. However, the high percentage of salts in these kinds of slag brings up the difficulty that water coming from rain, for example, dissolves and carries away the said salts towards rivers, in which they cause very important contamination.

One object of the patent is to take advantage of these residues and regenerate them, thus avoiding any kind of environmental or ecological contamination.

Another object of the patent is the obtaining of a by-product which is both clean and free of salts.

Another object of the patent is the recovery of the salts contained in the initial saline slag, for their later exploitation with a high commercial value.

The patent begins with a first operation, according to which, and given that saline slag appears in the shape of blocks which are more or less large in size, the said blocks are subjected to a preliminary process of grinding and screening, by which concentrates of metallic aluminium, alumina, etc. are obtained, together with a series of powders with a high content of salts such as sodium chloride, magnesium chloride, etc., whose granulometry or grading allows them to be used in later treatments.

This first operation is also interesting if the residues to be processed are not saline, and it is being used in this way.

The specific task of the patent starts from these powders with suitable grading, from which are obtained:

1.- Water with a salt concentration of some 250 grammes/litre.

2.- A clean by-product with a salt content that is very low, almost nonexistent.

To achieve this, the powders in question are mixed with water and shaken in a suitable mixer to dissolve the salt in the water, which is almost completely achieved. This mixture is sent to a filter of filters, where the solid parts that are not dissolved in the first operation are collected, in the shape of a cake, which in its turn is raised.

The cake in question, by the effect of the filtering itself, has a very low or almost nonexistent salt content, as washing allows the salts that might still remain in it to be eliminated.

The remaining product, that is the saturated water, with a content of approximately 250 grammes per litre of salts such as sodium chloride, potassium chloride, etc., is placed in open-air tanks, of the kind used at saltworks or in one characteristic and specifically of a salt pan, in which this mass of water will chrystallize in an indeterminate period of time with the use of environmental solar energy alone.

Once that the salt contained in the solution has been chrystallized by the action of the solar energy, it is stored for later use in the refining process for aluminium scrap in rotary-hearth furnaces or in other applications.

It follows from what has been stated, that the advantage of all the materials that are derived from the saline slag which has been mentioned above is that they are perfectly re-usable, with the exception of the by-product without salts that make up the cakes, and all this with a really low cost.

The mixing and shaking of the powders with water can be carried out either in the same or in a different place as the chrystallizing stage and, in the same way, suitable filters will be available, in one case or the other, to collect the by-product.

It is important to emphasize, once that the nature and advantages of this invention patent have been described, that it has a non-restrictive character, in that changes in the shape, material or sizes of its constituent parts will not in any way alter its essence, as long as they do not mean a substantial variation of the whole.

## Claims

1.- "RECYCLING PROCESS FOR SLAG, ESPECIALLY SALTS PROCEEDING FROM THE REFINING OF ALUMINIUM SCRAP", in that the saline slags proceeding from the refining of aluminium scrap are ground and screened until a concentrate of metallic aluminium and powders with a high content of re-usable salts is obtained, characterized because these powders are mixed with water and suitable shaken to dissolve the salt completely in the water, in that the solution obtained is sent to a series of cake-wash filters where a by-products remains deposited, in that the solution is later placed in shallow tanks or salt pans, where it is dried and the salt chrystallizes by the effect of environmental solar action.

2.- "RECYCLING PROCESS FOR SLAG, ESPECIALLY SALTS PROCEEDING FROM THE REFINING OF ALUMINIUM SCRAP", in accordance with the 1st claim, characterized because the by-product is almost completely free of salts.

3.- "RECYCLING PROCESS FOR SLAG, ESPECIALLY SALTS PROCEEDING FROM THE REFINING OF ALUMINIUM SCRAP", in accordance with the 1st claim, characterized because the solution obtained contains approximately 250 grammes per litre of salt, sodium chloride and potassium chloride.

4. "RECYCLING PROCESS FOR SLAG, ESPECIALLY SALTS PROCEEDING FROM THE REFININF OF ALUMINIUM SCRAP", in accordance with the 1st claim, characterized because the resultant product of the evaporation is salt, usually common salt, suitably chrystallized.